# EUROPÄISCHE PATENTSCHRIFT

(11) **EP 3 286 448 B1**
(45) Veröffentlichungstag und Bekanntmachung des Hinweises auf die Patenterteilung: **03.07.2019**
(21) Anmeldenummer: 16718848.1
(22) Anmeldetag: 16.03.2016
(51) Int. Cl.: F16D 23/14, F16D 25/08, F16D 25/12

(54) **BETÄTIGUNGSLAGER**
ACTUATION BEARING
PALIER D'ACTIONNEMENT

(30) Priorität: 20.04.2015 DE 102015207077
(43) Veröffentlichungstag der Anmeldung: 28.02.2018
(73) Patentinhaber: Schaeffler Technologies AG & Co. KG, 91074 Herzogenaurach (DE)
(72) Erfinder: BATALHA, Tiago, 13309 045 Itu (BR); CURY, Rudoniel Correa, 05510-021 Sao Paulo (BR)
(86) Internationale Anmeldenummer: PCT/DE2016/200142
(87) Internationale Veröffentlichungsnummer: WO 2016/169558

(56) Entgegenhaltungen:
- DE-A1- 10 242 841
- DE-A1-102005 029 347
- DE-A1-102010 021 788
- DE-A1-102013 222 564
- DE-U1- 9 313 557
- FR-A1- 2 780 122
- FR-A1- 2 930 612
- FR-A1- 2 992 383

## Beschreibung

Die Erfindung betrifft ein Betätigungslager für eine Kupplung, mit einem Auflagering für eine Vorlastfeder, der an einem Lagerinnenring angebracht ist. Die Erfindung betrifft des Weiteren ein Betätigungssystem für eine Kupplung, mit mindestens einem Nehmerzylinder, in welchem ein Nehmerkolben hin und her bewegbar angeordnet ist, und mit einem derartigen Betätigungslager.

Aus der deutschen Offenlegungsschrift 10 2012 222 458 A1 ist eine Vorrichtung zum Ausrücken einer Kupplung, insbesondere einer Kupplung im Antriebsstrang eines Kraftfahrzeugs, mit einem Gehäuse bekannt, das konzentrisch um eine Achse angeordnet ist und einen Druckraum ausbildet, in dem ein axial beweglicher Ringkolben angeordnet ist, und mit einem Ausrücklager, das zur Anlage an eine Tellerfeder der Kupplung ausgebildet und an dem Ringkolben befestigt und das Gehäuse über ein Deckellager an einem Deckel der Kupplung abgestützt ist, wobei das Deckellager einen feststehenden Innenring und einen drehenden Außenring mit dazwischen angeordneten Wälzkörpern aufweist. Aus der europäischen Patentschrift EP 1 961 985 B1 ist ein Nehmerzylinder einer Ausrückeinrichtung für eine Fahrzeugkupplung mit einer aus mindestens einem Magneten und mindestens einem mit diesem in Wirkverbindung stehenden Sensor gebildeten Einrichtung zur Wegmessung und Positionsbestimmung eines Kolbens bekannt, der in einem von einer Schmutzhülse abgedeckten zylindrischen Gehäuse axial bewegbar gelagert und von einem Haltering umgeben ist, wobei der Sensor am Gehäuse angebracht ist und jeweils einem Sensor ein am Haltering befestigter Magnet lagepositioniert zugeordnet ist, wobei der Magnet innerhalb der Schmutzhülse am Haltering angeordnet ist. Weiterhin offenbart die Druckschrift DE 10 2010 021 788 A1 ein Betätigungslager gemäß dem Oberbegriff von Patentanspruch 1.

Aufgabe der Erfindung ist es, ein unerwünschtes Lösen eines Auflagerings für eine Vorlastfeder, von einem Lagerinnenring im Betrieb eines Betätigungslagers für eine Kupplung zu verhindern.

Die Aufgabe wird durch die Merkmale der unabhängigen Patentansprüche gelöst. Vorteilhafte Ausführungsformen finden sich in den Unteransprüchen.

Die Aufgabe ist bei einem Betätigungslager für eine Kupplung, mit einem Auflagering für eine Vorlastfeder, der an einem Lagerinnenring angebracht ist, dadurch gelöst, dass der Auflagering für die Vorlastfeder eine umlaufende Anlagefläche aufweist, mit welcher der Auflagering so gegen den Lagerinnenring vorgespannt ist, dass sich der Auflagering mit der umlaufenden Anlagefläche federartig an dem Lagerinnenring abstützt. Zwischen dem Lagerinnenring und einem Lageraußenring des Betätigungslagers sind vorzugsweise Wälzkörper angeordnet. Im Betrieb des Betätigungslagers können Vibrationen auftreten. Bei im Rahmen der vorliegenden Erfindung durchgeführten Untersuchungen wurde herausgefunden, dass sich der Auflagering für die Vorlastfeder bei herkömmlichen Betätigungslagern von dem Lagerinnenring lösen kann. Das kann zu unerwünschten Funktionsstörungen im Betrieb des Betätigungslagers und/oder zu Beschädigungen an Einzelteilen des Betätigungslagers führen. Durch die Gestaltung des Auflagerings kann die Anlagefläche, mit welcher die Auflagefläche an dem Lagerinnenring anliegt, vorteilhaft vergrößert werden. Durch die federartige Abstützung des Auflagerings mit der umlaufenden Anlagefläche an dem Lagerinnenring kann ein unerwünschtes Lösen des Auflagerings von dem Lagerinnenring im Betrieb des Betätigungslagers, auch bei einem Auftreten von Vibrationen, sicher verhindert werden. Das Betätigungslager ist dadurch gekennzeichnet, dass die umlaufende Anlagefläche an einem Federschenkel vorgesehen ist, der von dem Auflagering abgewinkelt ist. Der Federschenkel erstreckt sich vorzugsweise in einer im Wesentlichen axialen Richtung. Durch den Federschenkel wird die federartige Vorspannung der umlaufenden Anlagefläche des Auflagerings gegen den Lagerinnenring vereinfacht. Der Federschenkel kann vorteilhaft aus einem geeigneten Federstahl gebildet sein.

Ein bevorzugtes Ausführungsbeispiel des Betätigungslagers ist dadurch gekennzeichnet, dass sich der Auflagering in einer radialen Richtung gegen eine radiale Innenfläche des Lagerinnenrings abstützt. Der Auflagering ist mit der umlaufenden Anlagefläche vorteilhaft in einer radialen Richtung nach außen gegen die radiale Innenfläche des Lagerinnenrings vorgespannt. Der Begriff radial bezieht sich auf eine Drehachse des Betätigungslagers. Axial bedeutet in Richtung oder parallel zu dieser Drehachse. Analog bedeutet radial quer zu der Drehachse.

Ein weiteres bevorzugtes Ausführungsbeispiel des Betätigungslagers ist dadurch gekennzeichnet, dass der Federschenkel von einem Verbindungsringkörper des Auflagerings abgewinkelt ist. Dadurch wird die Herstellung des Auflagerings vereinfacht. Der Verbindungsringkörper ist vorzugsweise einstückig mit dem Federschenkel verbunden. Ein Winkel zwischen dem Federschenkel und dem Verbindungsringkörper beträgt vorzugsweise etwa fünfundvierzig Grad.

Ein weiteres bevorzugtes Ausführungsbeispiel des Betätigungslagers ist dadurch gekennzeichnet, dass der Verbindungsringkörper von einer Befestigungsringscheibe abgewinkelt ist, mit welcher der Auflagering an einer Sensorhalteeinrichtung, insbesondere einer Magnethalteeinrichtung, befestigt ist. Die Sensorhalteeinrichtung, insbesondere die Magnethalteeinrichtung, dient vorzugsweise zur Aufnahme eines Sensors, insbesondere eines Magneten. Mit dem Sensor, insbesondere dem Magneten, ist es möglich, insbesondere zusammen mit einer geeigneten Sensorvorrichtung, eine Position und/oder einen Weg des Lagerinnenrings im Betrieb des Betätigungslagers zu erfassen beziehungsweise zu überwachen. Der Federschenkel ist über den Verbindungsringkörper vorzugsweise einstückig mit der Befestigungsringscheibe verbunden.

Ein weiteres bevorzugtes Ausführungsbeispiel des Betätigungslagers ist dadurch gekennzeichnet, dass die Magnethalteeinrichtung aus einem Kunststoffmaterial gebildet ist, wobei der Auflagering aus Metall gebildet ist. Bei der Magnethalteeinrichtung handelt es sich vorzugsweise um ein Spritzgussteil aus Kunststoff. Der Auflagering kann als Einlegeteil ausgeführt und/oder teilweise mit dem Kunststoffmaterial umspritzt sein, aus welchem die Magnethalteeinrichtung gebildet ist. Dadurch können die Herstellkosten für das Betätigungslager reduziert werden.

Ein weiteres bevorzugtes Ausführungsbeispiel des Betätigungslagers ist dadurch gekennzeichnet, dass der Auflagering an der umlaufenden Anlagefläche einen Außendurchmesser aufweist, der etwas größer als in Innendurchmesser des Lagerinnenrings ist. Dadurch kann auf einfache Art und Weise die federartige Vorspannung des Auflagerings gegen den Lagerinnenring dargestellt werden.

Die Aufgabe der Erfindung wird alternativ durch ein Betätigungslager gelöst, das dadurch gekennzeichnet ist, dass der Auflagering mit der umlaufenden Anlagefläche in eine Ringnut eingreift, die an dem Lagerinnenring vorgesehen ist. Durch das Eingreifen des Auflagerings in die Ringnut an dem Lagerinnenring kann der Auflagering zusätzlich an dem Lagerinnenring gehalten beziehungsweise fixiert werden.

Die oben angegebene Aufgabe ist alternativ oder zusätzlich durch ein Betätigungssystem für eine Kupplung gelöst, mit mindestens einem Nehmerzylinder, in welchem ein Nehmerkolben hin und her bewegbar angeordnet ist, und mit einem vorab beschriebenen Betätigungslager, das durch die Vorlastfeder beaufschlagt ist, die sich an dem Auflagering, insbesondere an der Befestigungsringscheibe des Auflagerings abstützt. Der Nehmerzylinder ist vorzugsweise in der Art eines CSC mit einem Gehäuse ausgeführt, in welchem zumindest ein kreisringförmiger Druckraum vorgesehen ist, in welchem der Nehmerkolben axial verschiebbar geführt ist. Die Buchstaben CSC stehen für die englischen Begriffe Concentric Slave Cylinder und können mit den deutschen Begriffen konzentrischer Nehmerzylinder übersetzt werden.

Die Erfindung betrifft des Weiteren einen Auflagering und/oder eine Magnethalteeinrichtung für ein vorab beschriebenes Betätigungslager, insbesondere für ein vorab beschriebenes Betätigungssystem. Der Auflagering und/oder die Magnethalteeinrichtung sind/ist separat handelbar.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 eine perspektivische Darstellung eines Betätigungslagers mit einem Auflagering gemäß einem ersten Ausführungsbeispiel;
Figur 2 die perspektivische Darstellung eines Schnitts durch das Betätigungslager aus Figur 1;
Figur 3 ein kartesisches Koordinatendiagramm mit einem Kontaktdruckverlauf des Auflagerings des in den Figuren 1 und 2 dargestellten Betätigungslagers;
Figur 4 eine ähnliche Darstellung wie in Figur 2 mit einem Auflagering gemäß einem zweiten Ausführungsbeispiel und
Figur 5 eine Kupplungsnehmerzylindereinrichtung mit einem Nehmerzylinder und einem Betätigungslager im Längsschnitt.

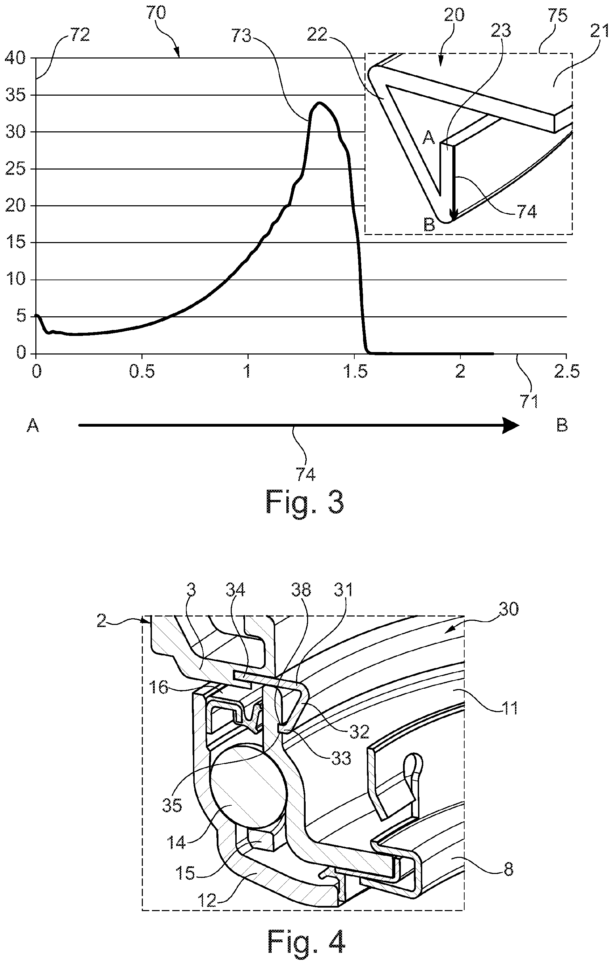

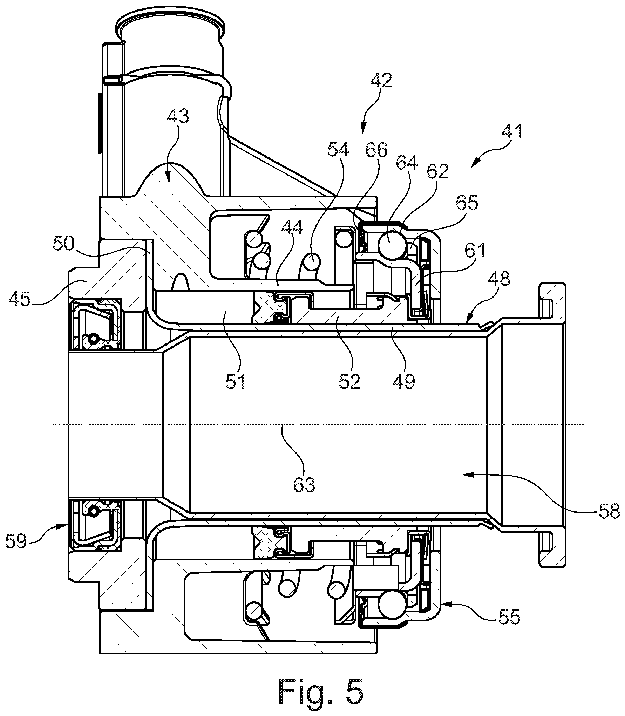

In Figur 5 ist eine Kupplungsnehmerzylindereinrichtung 42 mit einem Nehmerzylinder 42 im Längsschnitt dargestellt. Der Nehmerzylinder 42 umfasst ein Nehmerzylindergehäuse 43 und eine Führungshülse 48. Das Nehmerzylindergehäuse 43 umfasst zwei Gehäusekörper 44 und 45. Die Führungshülse 48 umfasst einen Grundkörper 49, der im Wesentlichen die Gestalt eines geraden Kreiszylindermantels hat. Von einem Ende, in Figur 4 einem linken Ende, des kreiszylindermantelförmigen Grundkörpers 49 der Führungshülse 48 ist ein Bund 50 abgewinkelt. Der Bund 50 erstreckt sich radial nach außen.

Der Gehäusekörper 44 des Nehmerzylindergehäuses 43 stellt eine Außenwandung dar, die im Wesentlichen die Gestalt eines Kreiszylindermantels hat und koaxial zu dem Grundkörper 49 der Führungshülse 48 angeordnet ist. Der Grundkörper 49 der Führungshülse 48 stellt eine Innenwandung eines Ringraums 51 dar, dessen Außenwandung von dem Gehäusekörper 44 des Nehmerzylindergehäuses 43 dargestellt wird.

Der Ringraum 51 stellt einen Druckraum dar, in dem ein Kolben 52 in axialer Richtung hin und her bewegbar geführt ist. Der Kolben 52 wird auch als Nehmerkolben bezeichnet. Durch eine Vorlastfeder 54 ist der Kolben 52 vorgespannt. Der Kolben 52 ist als Ringkolben ausgeführt.

An einem Ende, in Figur 5 dem rechten Ende, des Kolbens oder Nehmerkolbens 52 ist ein Betätigungslager 55 angebracht. Die Vorlastfeder 54 ist in axialer Richtung zwischen dem Nehmerzylindergehäuse 43 und dem Betätigungslager 55 angeordnet beziehungsweise eingespannt.

Der Nehmerzylinder 42 ist mit der Führungshülse 48 auf einem Rohrkörper 58 angeordnet. An einem Ende, in Figur 4 dem linken Ende, des Rohrkörpers 58 ist eine Dichtungseinrichtung 59 angeordnet. Die Dichtungseinrichtung 59 ist in radialer Richtung zwischen dem Rohrkörper 58 und dem Gehäusekörper 45 des Nehmerzylindergehäuses 43 angeordnet.

Das Betätigungslager 55 umfasst einen Lagerinnenring 61 und einen Lageraußenring 62. Der Lageraußenring 62 ist unter Zwischenschaltung von Wälzkörpern 64, die in einem Käfig 65 angeordnet sind, relativ zu dem Lagerinnenring 61 um eine Drehachse 63 drehbar. Ein Aufnahmeraum für die Wälzkörper 64 zwischen dem Lagerinnenring 61 und dem Lageraußenring 62 ist vorteilhaft mit Schmiermedium gefüllt. Eine Dichtungseinrichtung 66 verhindert einen unerwünschten Austritt von Schmiermedium.

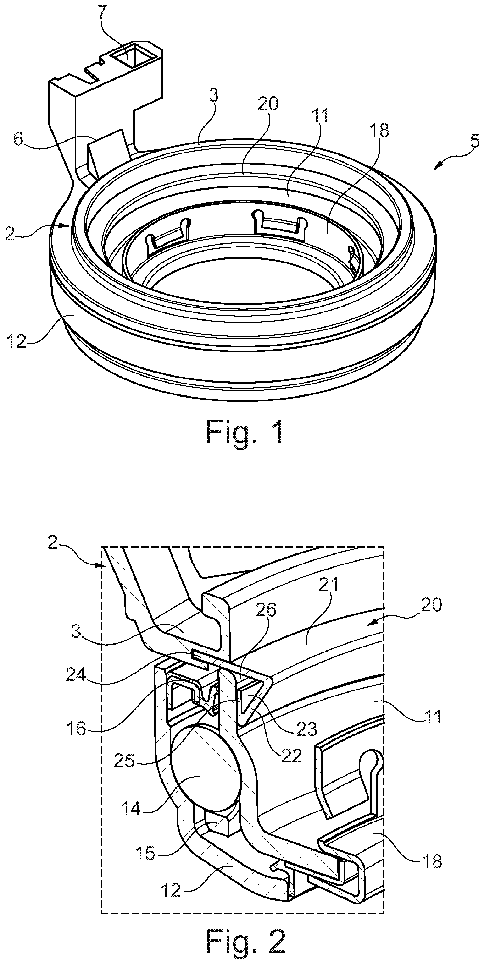

In Figur 1 ist ein Betätigungslager 5 perspektivisch dargestellt, welches das Betätigungslager 55 in Figur 5 ersetzen kann. Das Betätigungslager 5 ist mit einer Magnethalteeinrichtung 2 kombiniert. Die Magnethalteeinrichtung 2 umfasst einen im Wesentlichen ringförmigen Grundkörper 3, von dem ein Haltearm 6 abgewinkelt ist. Der Haltearm 6 umfasst an seinem freien Ende einen Magnetaufnahmeraum 7.

Der Magnetaufnahmeraum 7 dient zur Aufnahme eines Magneten, der zu einer Sensoreinrichtung gehört. Mit Hilfe der Sensoreinrichtung kann eine Position und/oder ein Weg des Magneten in dem Magnetaufnahmeraum 7 erfasst beziehungsweise überwacht werden.

Das Betätigungslager 5 umfasst, wie das Betätigungslager 55 in Figur 5, einen Lagerinnenring 11 und einen Lageraußenring 12. Der Lageraußenring 12 ist unter Zwischenschaltung von Wälzkörpern 14, die in einem Käfig 15 angeordnet sind, relativ zu dem Lagerinnenring 11 drehbar.

Eine Dichtungseinrichtung 16 verhindert einen unerwünschten Austritt von Schmiermedium aus einem Wälzkörperaufnahmeraum zwischen dem Lagerinnenring 11 und dem Lageraußenring 12. Das Betätigungslager 5 umfasst des Weiteren einen Sicherungsring 18, der an dem Lagerinnenring 11 angebracht ist.

In der Schnittdarstellung der Figur 2 sieht man einen von einer Vielzahl von Wälzkörpern 14, die zwischen dem Lagerinnenring 11 und Lageraußenring 12 in dem Käfig 15 angeordnet sind. Die Dichtungseinrichtung 16 ist in Figur 2 zwischen einem dem Grundkörper 3 der Magnethalteeinrichtung 2 zugewandten Umfangsrandbereich des Lageraußenrings 12 und dem Lagerinnenring 11 angeordnet. Die Magnethalteeinrichtung 2 ist in den Figuren 1 und 2 mit einem Auflagering 20 kombiniert.

Der Auflagering 20 umfasst eine Befestigungsringscheibe 21, die eine Beaufschlagungsfläche für die Vorlastfeder (54 in Figur 5) darstellt. Von der Befestigungsringscheibe 21 ist ein Verbindungsringkörper 22 abgewinkelt. Der Verbindungsringkörper 22 schließt einen Winkel von etwa fünfundvierzig Grad zu der Befestigungsringscheibe 21 ein.

Ein Federschenkel 23 ist durch den Verbindungsringkörper 22 einstückig mit der Befestigungsringscheibe 21 verbunden. Der Federschenkel 23 schließt einen Winkel von etwa fünfundvierzig Grad zu dem Verbindungsringkörper 22 ein.

Zur Befestigung des Auflagerings 20 an der Magnethalteeinrichtung 2 ist ein radial äußerer Umfangsrandbereich der Befestigungsringscheibe 21 in einer Ringnut 24 in dem Grundkörper 3der Magnethalteeinrichtung 2 aufgenommen.

Die Magnethalteeinrichtung 2 mit dem Grundkörper 3 und dem Haltearm 6 ist zum Beispiel als Kunststoff-Spritzgussteil ausgeführt. Daher kann die Befestigungsringscheibe 21 im Bereich der Ringnut 24 vorteilhaft mit dem Kunststoffmaterial, aus welchem die Magnethalteeinrichtung 2 gebildet ist, umspritzt sein.

Der Federschenkel 23 des Auflagerings 20 weist eine umlaufende Anlagefläche 25 auf, mit welcher der Federschenkel 23 an einer radialen Innenfläche 26 des Lagerinnenrings 11 anliegt. Der Auflagering 20 stützt sich im montierten Zustand des Betätigungslagers 5, unter Beaufschlagung durch die Federvorspannkraft der Vorlastfeder (54 in Figur 5), mit dem Federschenkel 23 federartig an dem Lagerinnenring 11 ab.

Darüber hinaus wird die Kontaktfläche zwischen dem Auflagering 20 und dem Lagerinnenring 11 durch die umlaufende Anlagefläche 25 vergrößert. Dadurch wird die Haltekraft des Auflagerings 20 und damit der Magnethalteeinrichtung 2 mit dem Magneten beziehungsweise der Sensoreinrichtung im montierten Zustand des Betätigungslagers 5 erhöht.

In Figur 3 ist ein kartesisches Koordinatendiagramm 70 mit einer x-Achse 71 und einer y-Achse 72 dargestellt. Auf der x-Achse 71 ist eine Länge des Federschenkels 23 des Auflagerings 20 zwischen einem freien Ende A und einem dem Verbindungsringkörper 22 zugewandten Ende B in Millimetern aufgetragen. Auf der y-Achse 72 ist ein Kontaktdruck zwischen dem Federschenkel 23 des Auflagerings 20 und dem Lagerinnenring 11 in Megapascal aufgetragen.

Durch eine Kurve 73 ist der Kontaktdruckverlauf über der durch einen Pfeil 74 angedeuteten Länge zwischen A und B dargestellt. Zur Veranschaulichung ist in einem Ausschnitt 75 der Auflagering 20 in einem perspektivischen Schnitt mit dem Pfeil 74 zwischen A und B dargestellt.

In Figur 4 ist in einem ähnlichen Schnitt wie in Figur 2 ein Ausführungsbeispiel mit einem Auflagering 30 perspektivisch dargestellt. Zur Bezeichnung gleicher oder ähnlicher Teile werden in den Figuren 2 und 4 die gleichen Bezugszeichen verwendet. Um Wiederholungen zu vermeiden, wird im Hinblick auf die gleichen oder ähnlichen Teile auf die vorangegangene Beschreibung der Figur 2 verwiesen. Im Folgenden wird hauptsächlich auf die Unterschiede zwischen den Figuren 2 und 4, insbesondere auf die Ausgestaltung des Auflagerings 30, eingegangen.

Der Auflagering 30 umfasst eine Befestigungsringscheibe 31, die, wie bei dem in Figur 2 dargestellten Auflagering 20 in einer Ringnut 34 der Magnethalteeinrichtung 2 befestigt ist. Der aus der Ringnut 34 herausragende radial innere Umfangsrandbereich der Befestigungsringscheibe 31 stellt eine Auflagefläche für die Vorlastfeder (54 in Figur 5) dar.

Von der Befestigungsringscheibe 31 ist ein Verbindungsringkörper 32 abgewinkelt. Ein Winkel, der zwischen der Befestigungsringscheibe 31 und dem Verbindungsringkörper 32 eingeschlossen ist, beträgt etwa fünfundvierzig Grad. Von dem Verbindungsringkörper 32 ist ein Umfangsrand 33 abgewinkelt. Der Umfangsrand 33 greift in eine Ringnut 34 in dem Lagerinnenring 11. Dabei liegt der Auflagering 30 mit einer umlaufenden Anlagefläche 35 des Umfangsrands 33 an dem Lagerinnenring 11 an.

Durch die Kombination des Umfangsrands 33 des Auflagerings 30 mit der Ringnut 38 in dem Lagerinnenring 11 wird eine Art Clipverbindung des Auflagerings 30 mit der Magnethalteeinrichtung 2 an dem Lagerinnenring 11 des Betätigungslagers 5 ermöglicht. Die clipartige oder clipsartige Verbindung ermöglicht eine besonders sichere Befestigung oder Halterung des Auflagerings 30 im eingebauten Zustand des Betätigungslagers.

### Bezugszeichenliste

- 2: Magnethalteeinrichtung
- 3: Grundkörper
- 5: Betätigungslager
- 6: Haltearm
- 7: Magnetaufnahmeraum
- 11: Lagerinnenring
- 12: Lageraußenring
- 14: Wälzkörper
- 15: Käfig
- 16: Dichtungseinrichtung
- 18: Sicherungsring
- 20: Auflagering
- 21: Befestigungsringscheibe
- 22: Verbindungsringkörper
- 23: Federschenkel
- 24: Ringnut
- 25: umlaufende Anlagefläche
- 26: radiale Innenfläche
- 30: Auflagering
- 31: Befestigungsscheibe
- 32: Verbindungsringkörper
- 33: Umfangsrand
- 34: Ringnut
- 35: umlaufende Anlagefläche
- 38: Ringnut
- 41: Kupplungsnehmerzylindereinrichtung
- 42: Nehmerzylinder
- 43: Nehmerzylindergehäuse
- 44: Gehäusekörper
- 45: Gehäusekörper
- 48: Führungshülse
- 49: Grundkörper
- 50: Bund
- 51: Ringraum
- 52: Kolben
- 54: Vorlastfeder
- 55: Betätigungslager
- 58: Rohrkörper
- 59: Dichtungseinrichtung
- 61: Lagerinnenring
- 62: Lageraußenring
- 63: Drehachse
- 64: Wälzkörper
- 65: Käfig
- 66: Dichtungseinrichtung
- 70: kartesisches Koordinatendiagramm
- 71: x-Achse
- 72: y-Achse
- 73: Kurve
- 74: Pfeil
- 75: Ausschnitt

## Patentansprüche

1. Betätigungslager (5;55) für eine Kupplung, mit einem Auflagering (20;30) für eine Vorlastfeder (54), der an einem Lagerinnenring (11;61) angebracht ist, wobei der Auflagering (20;30) für die Vorlastfeder (54) eine umlaufende Anlagefläche (25;35) aufweist, mit welcher der Auflagering (20;30) so gegen den Lagerinnenring (11;61) vorgespannt ist, dass sich der Auflagering (20;30) mit der umlaufenden Anlagefläche (25;35) federartig an dem Lagerinnenring (11;61) abstützt, **dadurch gekennzeichnet, dass** die umlaufende Anlagefläche (25) an einem Federschenkel vorgesehen ist, der von dem Auflagering (20) abgewinkelt ist.

2. Betätigungslager nach Anspruch 1, **dadurch gekennzeichnet, dass** sich der Auflagering (20;30) in einer radialen Richtung gegen eine radiale Innenfläche (26) des Lagerinnenrings (11;61) abstützt.

3. Betätigungslager nach Anspruch 1 oder 2, **dadurch gekennzeichnet, dass** der Federschenkel (23) von einem Verbindungskörper (22) des Auflagerings (20) abgewinkelt ist.

4. Betätigungslager nach Anspruch 3, **dadurch gekennzeichnet, dass** der Verbindungskörper (22) von einer Befestigungsscheibe (21) abgewinkelt ist, mit welcher der Auflagering (20) an einer Sensorhalteeinrichtung, insbesondere einer Magnethalteeinrichtung (2), befestigt ist.

5. Betätigungslager nach Anspruch 4, **dadurch gekennzeichnet, dass** die Magnethalteeinrichtung (2) aus einem Kunststoffmaterial gebildet ist, wobei der Auflagering (20;30) aus Metall gebildet ist.

6. Betätigungslager nach einem der vorhergehenden Ansprüche, **dadurch gekennzeichnet, dass** der Auflagering (20) an der umlaufenden Anlagefläche (25) einen Außendurchmesser aufweist, der etwas größer als ein Innendurchmesser des Lagerinnenrings (11) ist.

7. Betätigungslager (5;55) für eine Kupplung, mit einem Auflagering (20;30) für eine Vorlastfeder (54), der an einem Lagerinnenring (11;61) angebracht ist, wobei der Auflagering (20;30) für die Vorlastfeder (54) eine umlaufende Anlagefläche (25;35) aufweist, mit welcher der Auflagering (20;30) so gegen den Lagerinnenring (11 ;61) vorgespannt ist, dass sich der Auflagering (20;30) mit der umlaufenden Anlagefläche (25;35) federartig an dem Lagerinnenring (11;61) abstützt, **dadurch gekennzeichnet, dass** der Auflagering (30) mit der umlaufenden Anlagefläche (35) in eine Ringnut (38) eingreift, die an dem Lagerinnenring (11) vorgesehen ist.

8. Betätigungssystem (41) für eine Kupplung, mit mindestens einem Nehmerzylinder (42), in welchem ein Nehmerkolben (52) hin und her bewegbar angeordnet ist, und mit einem Betätigungslager (5;55) nach einem der vorhergehenden Ansprüche, das durch die Vorlastfeder (54) beaufschlagt ist, die sich an dem Auflagering (20;30), insbesondere an der Befestigungsringscheibe (21) des Auflagerings (20), abstützt.

## Claims

1. Actuation bearing (5; 55) for a clutch, having a support ring (20; 30) for a preload spring (54), which support ring is attached to a bearing inner ring (11; 61), wherein the support ring (20; 30) for the preload spring (54) has an encircling abutment surface (25; 35) with which the support ring (20; 30) is preloaded against the bearing inner ring (11; 61) such that the support ring (20; 30) is supported with the encircling abutment surface (25; 35) in the manner of a spring against the bearing inner ring (11; 61), **characterized in that** the encircling abutment surface (25) is provided on a spring leg which is angled from the support ring (20).

2. Actuation bearing according to Claim 1, **characterized in that** the support ring (20; 30) is supported in a radial direction against a radial inner surface (26) of the bearing inner ring (11; 61) .

3. Actuation bearing according to Claim 1 or 2, **characterized in that** the spring leg (23) is angled from a connecting body (22) of the support ring (20) .

4. Actuation bearing according to Claim 3, **characterized in that** the connecting body (22) is angled from a fastening disc (21) by means of which the support ring (20) is fastened to a sensor holding device, in particular a magnet holding device (2).

5. Actuation bearing according to Claim 4, **characterized in that** the magnet holding device (2) is formed from a plastics material, wherein the support ring (20; 30) is formed from metal.

6. Actuation bearing according to any of the preceding claims, **characterized in that** the support ring (20) has, at the encircling abutment surface (25), an outer diameter which is slightly larger than an inner diameter of the bearing inner ring (11).

7. Actuation bearing (5; 55) for a clutch, having a support ring (20; 30) for a preload spring (54), which support ring is attached to a bearing inner ring (11; 61), wherein the support ring (20; 30) for the preload spring (54) has an encircling abutment surface (25; 35) with which the support ring (20; 30) is preloaded against the bearing inner ring (11; 61) such that the support ring (20; 30) is supported with the encircling abutment surface (25; 35) in the manner of a spring against the bearing inner ring (11; 61), **characterized in that** the support ring (30) engages with the encircling abutment surface (35) into an annular groove (38) which is provided on the bearing inner ring (11).

8. Actuation system (41) for a clutch, having at least one slave cylinder (42) in which a slave piston (52) is arranged so as to be movable back and forth, and having an actuation bearing (5; 55) according to any of the preceding claims, which is acted on by the preload spring (54) which is supported on the support ring (20; 30), in particular on the fastening ring disc (21) of the support ring (20).

## Revendications

1. Palier d'actionnement (5; 55) pour un embrayage, avec une bague d'appui (20; 30) pour un ressort de précharge (54), qui est placée sur une bague intérieure de palier (11; 61), dans lequel la bague d'appui (20; 30) pour le ressort de précharge (54) présente une face d'appui périphérique (25; 35), avec laquelle la bague d'appui (20; 30) est précontrainte contre la bague intérieure de palier (11; 61), de telle manière que la bague d'appui (20; 30) s'appuie avec la face d'appui périphérique (25; 35) à la manière d'un ressort sur la bague intérieure de palier (11; 61), **caractérisé en ce que** la face d'appui périphérique (25) est prévue sur une branche de ressort, qui est coudée à partir de la bague d'appui (20).

2. Palier d'actionnement selon la revendication 1, **caractérisé en ce que** la bague d'appui (20; 30) s'appuie dans une direction radiale contre une face intérieure radiale (26) de la bague intérieure de palier (11; 61).

3. Palier d'actionnement selon une revendication 1 ou 2, **caractérisé en ce que** la branche de ressort (23) est coudée à partir d'un corps de liaison (22) de la bague d'appui (20).

4. Palier d'actionnement selon la revendication 3, **caractérisé en ce que** le corps de liaison (22) est coudé à partir d'une rondelle de fixation (21), avec laquelle la bague d'appui (20) est fixée à un dispositif de support de capteur, en particulier à un dispositif de support d'aimant (2).

5. Palier d'actionnement selon la revendication 4, **caractérisé en ce que** le dispositif de support d'aimant (2) est formé par un matériau en matière plastique, dans lequel la bague d'appui (20; 30) est formée de métal.

6. Palier d'actionnement selon l'une quelconque des revendications précédentes, **caractérisé en ce que** la bague d'appui (20) présente à la face d'appui périphérique (25) un diamètre extérieur, qui est légèrement plus grand qu'un diamètre intérieur de la bague intérieure de palier (11).

7. Palier d'actionnement (5; 55) pour un embrayage, avec une bague d'appui (20; 30) pour un ressort de précharge (54), qui est placée sur une bague intérieure de palier (11; 61), dans lequel la bague d'appui (20; 30) pour le ressort de précharge (54) présente une face d'appui périphérique (25; 35), avec laquelle la bague d'appui (20; 30) est précontrainte contre la bague intérieure de palier (11; 61), de telle manière que la bague d'appui (20; 30) s'appuie avec la face d'appui périphérique (25; 35) à la manière d'un ressort sur la bague intérieure de palier (11; 61), **caractérisé en ce que** la bague d'appui (30) s'engage avec la face d'appui périphérique (35) dans une rainure annulaire (38), qui est prévue sur la bague intérieure de palier (11).

8. Système d'actionnement (41) pour un embrayage, avec au moins un cylindre récepteur (42), dans lequel un piston récepteur (52) est disposé de façon mobile réciproquement, et avec un palier d'actionnement (5; 55) selon l'une quelconque des revendications précédentes, qui est soumis au ressort de précharge (54), qui s'appuie sur la bague d'appui (20; 30), en particulier sur la rondelle annulaire de fixation (21) de la bague d'appui (20) .
